# EUROPEAN PATENT APPLICATION

(11) **EP 4 273 189 A1**
(43) Date of publication of application: **08.11.2023**
(21) Application number: 22864858.0
(22) Date of filing: 11.07.2022
(51) Int. Cl.: C08J 5/18, C08L 1/00, C08L 5/00, C08L 5/06, C08L 89/00, C08L 91/00, C08L 3/02, A24B 15/12, A24D 1/00

(54) **FLAVOR SHEET HAVING IMPROVED PHYSICAL PROPERTIES, SMOKING ARTICLE INCLUDING SAME, AND METHOD FOR PRODUCING FLAVOR SHEET AND SMOKING ARTICLE**

(30) Priority: 06.09.2021 KR 20210118610
(71) Applicant: KT & G Corporation, Daejeon 34337 (KR)
(72) Inventor: LEE, Geon Chang, Daejeon 34128 (KR); KIM, Ick Joong, Daejeon 34128 (KR); JUNG, Kyung Bin, Daejeon 34128 (KR); JEOUNG, Eun Mi, Daejeon 34128 (KR); HWANG, Min Hee, Daejeon 34128 (KR)
(74) Representative: Ter Meer Steinmeister & Partner
(86) International application number: PCT/KR2022/010038
(87) International publication number: WO 2023/033349

(57) **Abstract**

A flavoring sheet with improved physical properties, a smoking article including the same, and methods of producing the flavoring sheet and the smoking article are provided. The flavoring sheet according to some embodiments of the present disclosure may include a hydrocolloid material configured to form a sheet, a flavoring, and a plasticizer. The plasticizer can improve physical properties of the flavoring sheet and thus enhance workability of a process of cutting the flavoring sheet.

## Description

### Technical Field

The present disclosure relates to a flavoring sheet with improved physical properties, a smoking article including the same, and methods of producing the flavoring sheet and the smoking article, and more particularly, to a flavoring sheet whose physical properties are improved to enhance workability of a cutting process, a smoking article which includes the flavoring sheet and thus has improved flavor expression and flavor persistence, and methods of producing the flavoring sheet and the smoking article.

### Background Art

To satisfy smokers' preferences, smoking articles (e.g., cigarettes) are flavored in various ways. Directly adding (e.g., spraying) a flavoring liquid to a smoking material, such as shredded tobacco, or a filter plug is a typical example of a flavoring method. However, such methods have various problems in that there is a limit to the amount of flavoring liquid added, an intended flavor is not expressed, or the flavor expression rapidly decreases during smoking.

Specifically, in the method in which a flavoring liquid is added to a smoking material, since the flavoring liquid may aggregate with the smoking material, it is difficult to add a large amount of flavoring liquid. Also, an unintended flavor may be expressed due to deterioration of the flavoring liquid caused by a high heating temperature (or burning temperature) during smoking. Next, in the method in which a flavoring liquid is added to a filter plug, the flavoring liquid may be added in a larger amount as compared to the above method, but there is still a limitation in the amount of flavoring liquid added.

Meanwhile, regardless of the method, there is a problem in that the added flavoring liquid is rapidly expressed at an early stage of smoking and the flavor expression decreases toward the end of smoking, and when the flavoring liquid is added in an excessive amount, a problem in which a wrapper wrapping around the filter plug or smoking material becomes wet and contaminated may occur.

### Disclosure

### Technical Problem

Some embodiments of the present disclosure are directed to providing a flavoring sheet with improved physical properties and a method of producing the flavoring sheet.

Some embodiments of the present disclosure are also directed to providing a flavoring sheet with an improved surface roughness and a method of producing the flavoring sheet.

Some embodiments of the present disclosure are also directed to providing a smoking article with improved flavor expression and flavor persistence and a method of producing the smoking article.

Objectives of the present disclosure are not limited to the above-mentioned objectives, and other unmentioned objectives should be clearly understood by those of ordinary skill in the art to which the present disclosure pertains from the description below.

### Technical Solution

A flavoring sheet according to some embodiments of the present disclosure for achieving the above objectives may include a hydrocolloid material configured to form a sheet, a flavoring, and a plasticizer.

In some embodiments, the hydrocolloid material may include a modified cellulose material.

In some embodiments, the plasticizer may include at least one of glycerin and propylene glycol.

In some embodiments, a tensile strength of the flavoring sheet may be in a range of 2.2 MPa to 3.6 MPa.

In some embodiments, content of the plasticizer in the flavoring sheet may be in a range of 5 parts by weight to 30 parts by weight.

In some embodiments, content of moisture in the flavoring sheet may be in a range of 5 parts by weight to 20 parts by weight.

In some embodiments, the flavoring sheet may be produced from a sheet composition including the hydrocolloid material, the flavoring, the plasticizer, a solvent, and a powder-type material.

A method of producing a flavoring sheet according to some embodiments of the present disclosure for achieving the above objectives may include mixing a hydrocolloid material, a solvent, a plasticizer, and a flavoring to produce a sheet composition and drying the produced sheet composition.

A smoking article according to some embodiments of the present disclosure for achieving the above objectives may include a smoking material portion in which cut pieces of a flavoring sheet and a shredded tobacco-type tobacco material are mixed. Here, the flavoring sheet may include a hydrocolloid material, a plasticizer, and a flavoring.

### Advantageous Effects

According to some embodiments of the present disclosure, by adding a plasticizer during a process of producing a flavoring sheet, a flavoring sheet with improved physical properties can be produced. Since the flavoring sheet does not have a physical property of being brittle even after being dried, workability of a sheet cutting process can be improved. Also, accordingly, a smoking article to which cut pieces of the flavoring sheet are applied can be easily produced.

Also, by adding a moisturizing plasticizer such as glycerin or propylene glycol that helps the flavoring sheet retain moisture, the physical properties of the flavoring sheet can be further improved.

Also, a smoking article in which cut pieces of the flavoring sheet and a shredded tobacco-type tobacco material are mixed can be produced. The smoking article can ensure excellent flavor expression and flavor persistence.

In addition, by mixing a powder-type material with a sheet composition or adding a powder-type material during a drying process, a flavoring sheet with an improved (increased) surface roughness can be produced. Since an area of the flavoring sheet that may substantially come into contact with other materials is small, an agglomeration phenomenon (e.g., a phenomenon of sticking to each other) can be minimized when the flavoring sheet is mixed with the shredded tobacco-type tobacco material. Also, accordingly, the shredded tobacco-type tobacco material and the cut pieces of the flavoring sheet can be evenly mixed (that is, the mixability is improved), and the workability of the mixing process can also be improved. Further, as the mixability is improved, the flavor expression of the smoking article can be uniformly performed.

The advantageous effects according to the technical spirit of the present disclosure are not limited to those mentioned above, and other unmentioned advantageous effects should be clearly understood by those of ordinary skill in the art from the description below.

### Description of Drawings

FIG. 1 is an exemplary flowchart schematically illustrating a method of producing a flavoring sheet according to some embodiments of the present disclosure.
FIG. 2 is an exemplary view for describing a method of producing a flavoring sheet according to some other embodiments of the present disclosure.
FIG. 3 is an exemplary view schematically illustrating a smoking article according to some embodiments of the present disclosure.
FIG. 4 is an exemplary view for describing a method of applying a flavoring sheet according to some embodiments of the present disclosure.

### Modes of the Invention

Hereinafter, exemplary embodiments of the present disclosure will be described in detail with reference to the accompanying drawings. Advantages and features of the present disclosure and methods of achieving the same should become clear from embodiments described in detail below with reference to the accompanying drawings. However, the technical spirit of the present disclosure is not limited to the following embodiments and may be implemented in various different forms. The following embodiments only make the technical spirit of the present disclosure complete and are provided to completely inform those of ordinary skill in the art to which the present disclosure pertains of the scope of the disclosure. The technical spirit of the present disclosure is defined only by the scope of the claims.

In assigning reference numerals to components of each drawing, it should be noted that the same reference numerals are assigned to the same components where possible even when the components are illustrated in different drawings. Also, in describing the present disclosure, when detailed description of a known related configuration or function is deemed as having the possibility of obscuring the gist of the present disclosure, the detailed description thereof will be omitted.

Unless otherwise defined, all terms including technical or scientific terms used in this specification have the same meaning as commonly understood by those of ordinary skill in the art to which the present disclosure pertains. Terms defined in commonly used dictionaries should not be construed in an idealized or overly formal sense unless expressly so defined herein. Terms used in this specification are for describing the embodiments and are not intended to limit the present disclosure. In this specification, a singular expression includes a plural expression unless the context clearly indicates otherwise.

Also, in describing components of the present disclosure, terms such as first, second, A, B, (a), and (b) may be used. Such terms are only used for distinguishing one component from another component, and the essence, order, sequence, or the like of the corresponding component is not limited by the terms. In a case in which a certain component is described as being "connected," "coupled," or "linked" to another component, it should be understood that, although the component may be directly connected or linked to the other component, still another component may also be "connected," "coupled," or "linked" between the two components.

The terms "comprises" and/or "comprising" used herein do not preclude the possibility of presence or addition of one or more components, steps, operations, and/or devices other than those mentioned.

First, some terms used in various embodiments of the present disclosure will be clarified.

In the following embodiments, "smoking article" may refer to any product that can be smoked or any product that can provide a smoking experience, regardless of whether the product is based on tobacco, tobacco derivatives, expanded tobacco, reconstituted tobacco, or tobacco substitutes. For example, smoking articles may include products that can be smoked, such as a cigarette, a cigar, and a cigarillo. As another example, smoking articles may include a burning-type smoking article and a heating-type smoking article.

In the following embodiments, "smoking material" may refer to any material that generates smoke and/or aerosol or is used in smoking. For example, the smoking material may include a tobacco material. For example, the tobacco material may include pieces of tobacco leaves, tobacco stems, or materials obtained by processing the pieces of tobacco leaves or tobacco stems. As a more specific example, the tobacco material may include ground tobacco leaves, ground reconstituted tobacco, expanded shredded tobacco, expanded tobacco midribs, and reconstituted tobacco leaves. However, the tobacco material is not limited thereto.

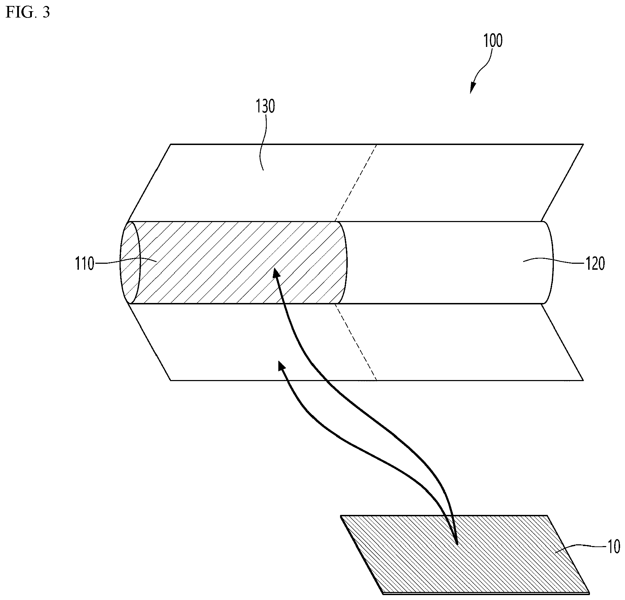

In the following embodiments, "upstream" or "upstream direction" may refer to a direction moving away from an oral region of a smoker, and "downstream" or "downstream direction" may refer to a direction approaching the oral region of the smoker. The terms "upstream" and "downstream" may be used to describe relative positions of components constituting a smoking article. For example, in a smoking article 100 illustrated in FIG. 3, a filter portion 120 is disposed downstream or in a downstream direction of a smoking material portion 110, and the smoking material portion 110 is disposed upstream or in an upstream direction of the filter portion 120.

In the following embodiments, "longitudinal direction" may refer to a direction corresponding to a longitudinal axis of a smoking article.

In the following embodiments, "puff" refers to inhalation by a user (smoker), and the inhalation may be a situation in which a user draws smoke into his or her oral cavity, nasal cavity, or lungs through the mouth or nose.

In the following embodiments, "sheet" may refer to a thin layer component whose width and length are substantially larger than a thickness thereof. The term "sheet" may be interchangeably used with the term "web" or "film" in the art.

In the following embodiments, "flavor sheet" or "flavoring sheet" may refer to a flavoring-containing material that is produced in the form of a sheet.

In the following embodiments, "powder" may encompass all forms of particles, beads, granules, powders, and the like.

Hereinafter, various embodiments of the present disclosure will be described in detail.

According to some embodiments of the present disclosure, a flavoring sheet with improved physical properties can be provided. Specifically, by adding a plasticizer during a process of producing a flavoring sheet (or a sheet composition), a flavoring sheet with improved physical properties can be produced. Since the flavoring sheet does not have a physical property of being brittle even after being dried, workability of a sheet cutting process can be improved. Also, accordingly, a smoking article to which cut pieces of the flavoring sheet are applied can be easily produced.

Hereinafter, the flavoring sheet will be described in detail with reference to the accompanying drawings.

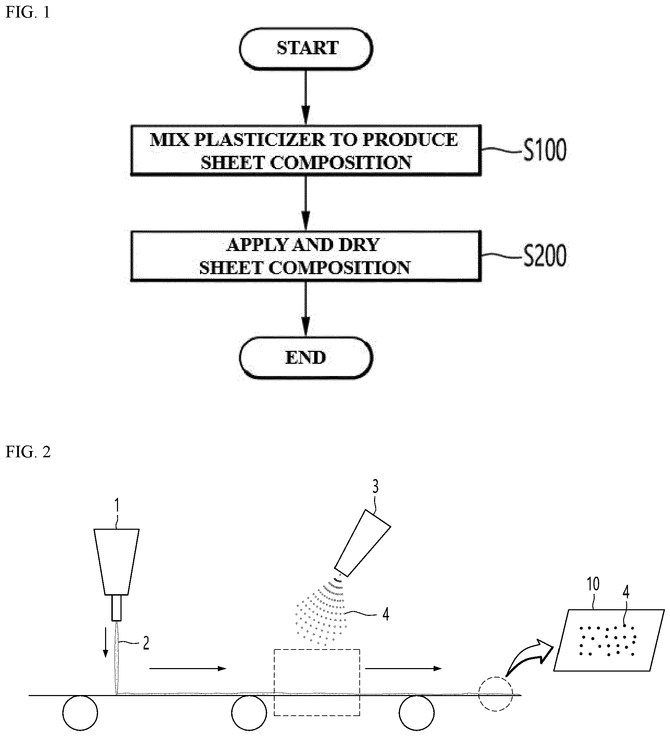

FIG. 1 is an exemplary flowchart schematically illustrating a method of producing a flavoring sheet according to some embodiments of the present disclosure. However, this is only an exemplary embodiment for achieving the objectives of the present disclosure, and, of course, some steps may be added or omitted as necessary.

As illustrated in FIG. 1, the production method according to the present embodiment may start with mixing a plasticizer to produce a sheet composition (S100). Specifically, a hydrocolloid material, a solvent such as distilled water or ethanol, a flavoring, and a plasticizer may be mixed to produce a sheet composition in a liquid phase (e.g., a slurry form). Here, the liquid phase may not only include a liquid form but also include a form in which a liquid and a solid are mixed (e.g., a slurry form).

The solvent such as distilled water or ethanol may be a component for controlling the viscosity of the slurry-type sheet composition.

Next, the hydrocolloid material may be a material for covering and fixing the flavoring and may be a sheet-forming agent for forming a sheet. Since the hydrocolloid material itself becomes sticky when in contact with the solvent such as distilled water or ethanol, a flavoring sheet based on such a material has an advantage that it can be easily attached to a smoking article without a separate adhesive. For example, in a case in which the flavoring sheet is disposed on a wrapper of a smoking article, when the hydrocolloid material is used as a sheet-forming agent, a process of placing the flavoring sheet can be simplified, and the flavoring sheet may be free from a safety problem due to an adhesive.

Examples of the hydrocolloid material may include gelatin, agar, gellan gum, pectin, guar gum, xanthan gum, glucomannan, hydroxypropyl methylcellulose (HPMC), methyl cellulose (MC), ethyl cellulose (EC), carboxymethyl cellulose (CMC), and starch, but the hydrocolloid material is not limited thereto.

In some embodiments, the sheet composition may include a modified cellulose material among various hydrocolloid materials. Here, "modified cellulose" may refer to cellulose in which a specific functional group is substituted in a molecular structure. Examples of modified cellulose may include HPMC, MC, CMC, and EC, but modified cellulose is not limited thereto. For example, HPMC may have a grade in a range of about 4 to 40000 according to a proportion and molecular weight in which a hydroxypropyl group and a methyl group (or methoxy group) are substituted. The viscosity of modified cellulose may be determined according to the grade. More specifically, physicochemical characteristics of HPMC relate to a proportion of the methoxy group and a proportion and molecular weight of the hydroxypropyl group, and according to The United States Pharmacopeial Convention (USP), types of HPMC may be classified into HPMC 1828, HPMC2208, HPMC2906, HPMC2910, and the like according to proportions of the methoxy group and hydroxypropyl group. Here, the first two numbers may refer to a proportion of the methoxy group, and the last two numbers may refer to a proportion of the hydroxypropyl group. As a result of continuous experiments by the inventors of the present disclosure, the flavoring sheet produced from a sheet composition including modified cellulose was confirmed as having excellent physical properties and holding a large amount of flavor.

Next, examples of the flavoring may include menthol, nicotine, nicotine salt, a leaf tobacco extract, a leaf tobacco extract containing nicotine, a natural vegan flavoring (e.g., cinnamon, sage, herb, chamomile, kudzu, amacha, clove, lavender, cardamom, clove, nutmeg, bergamot, geranium, honey essence, rose oil, lemon, orange, cinnamon, caraway, jasmine, ginger, coriander, vanilla extract, spearmint, peppermint, cassia, coffee, celery, cascarilla, sandalwood, cocoa, ylang-ylang, fennel, anise, licorice, St. John's bread, plum extract, peach extract, etc.), sugars (e.g., glucose, fructose, isomerized sugar, caramel, etc.), cocoa (e.g., powder, extract, etc.), esters (e.g., isoamyl acetate, linalyl acetate, isoamyl propionate, linalyl butyrate, etc.), ketones (e.g., menthone, ionone, damascenone, ethyl maltol, etc.), alcohols (e.g., geraniol, linalool, anetol, eugenol, etc.), aldehydes (e.g., vanillin, benzaldehyde, anisaldehyde, etc.), lactones, (e.g., γ-undecalactone, γ-nonalactone, etc.), an animal flavoring (e.g., musk, ambergris, civet, castoreum, etc.), and hydrocarbons (e.g., limonene, pinene, etc.). The flavoring may be used in a solid state or may be used by being dissolved or dispersed in an appropriate solvent, e.g., propylene glycol, ethyl alcohol, benzyl alcohol, or triethyl citrate. These flavorings may be used alone or used in a mixture. However, the scope of the present disclosure is not limited by the examples described above.

Next, the plasticizer may add appropriate flexibility to the flavoring sheet and thus improve the physical properties of the sheet. For example, the plasticizer may prevent the flavoring sheet from having a physical property of being brittle and thus improve the overall physical properties of the sheet, and accordingly, workability of a sheet cutting process can be significantly enhanced.

For example, the plasticizer may include at least one of glycerin and propylene glycol but is not limited thereto. For reference, the plasticizers listed above are moisturizing plasticizers and may increase content of moisture in the flavoring sheet and significantly improve the physical properties of the flavoring sheet.

Meanwhile, in some embodiments, the sheet composition may further include low methoxyl pectin (LM-pectin). Alternatively, among hydrocolloid materials, LM-pectin may be included as a sheet-forming agent in the sheet composition. LM-pectin is a low ester-pectin or low methoxyl pectin in which relatively little esterification is performed. Specifically, LM pectin may be a pectin that contains a carboxyl group by less than about 50% in a molecular structure. Due to having a characteristic of not gelating when cooled unlike carrageenan, LM-pectin may lower the viscosity of the slurry-type sheet composition (e.g., to about 600 cp to 800 cp) and thus improve workability of a process of producing the sheet composition.

LM-pectin may contain a carboxyl group by less than about 50%, less than about 40%, less than about 30%, less than about 20%, or less than about 10% in a molecular structure. The lower the content of carboxyl group in the molecular structure of LM-pectin, the lower the viscosity of a slurry including LM-pectin.

Also, in some embodiments, the sheet composition may further include an emulsifier. The emulsifier may allow a highly fat-soluble flavoring and a water-soluble hydrocolloid material to be mixed well and significantly increase the flavor holding amount and flavor retention of the flavoring sheet. Examples of the emulsifier may include natural emulsifiers such as montanov wax, olive wax, lecithin, glyceryl stearate, and stearic acid and synthetic emulsifiers such as monoglyceride, diglyceride, sorbitan, fatty acid ester, and sucrose ester, but the emulsifier is not limited thereto.

Also, in some embodiments, the sheet composition may further include a bulking agent. The bulking agent may be a material that increases the total mass of components other than distilled water (that is, dry mass) to increase the volume of the flavoring sheet being produced but does not affect the original function of the flavoring sheet. Specifically, the bulking agent may have characteristics of increasing the volume of the flavoring sheet but not adversely affecting the flavor retaining function of the flavoring sheet while not substantially increasing the viscosity of the slurry. The bulking agent may be starch, modified starch, or starch hydrolyzate but is not limited thereto.

Modified starch refers to starch acetate, oxidized starch, hydroxypropyl distarch phosphate, hydroxypropyl starch, distarch phosphate, monostarch phosphate, phosphorylated distarch phosphate, or the like.

Starch hydrolyzate refers to a material obtained by a process that includes a process of hydrolyzing starch. For example, starch hydrolyzate may include a material obtained by directly hydrolyzing starch (that is, dextrin) or a material obtained by heating and hydrolyzing starch (that is, indigestible dextrin). For example, the bulking agent may be dextrin, more specifically, cyclodextrin.

Generally, starch hydrolyzate may be starch hydrolyzate having a dextrose equivalent (DE) value in a range of about 2 to about 40 or may be starch hydrolyzate having a DE value in a range of about 2 to about 20. For example, as the starch hydrolyzate having a DE value in a range of about 2 to about 20, Pinedex #100 (Matsutani Chemical Industry Co. Ltd), Pinefiber (Matsutani Chemical Industry Co. Ltd), TK-16 (Matsutani Chemical Industry Co. Ltd), or the like may be utilized.

Here, "DE" is an abbreviation of "dextrose equivalent," and the DE value indicates a degree of hydrolysis of starch, that is, a saccharification rate of starch. In the present disclosure, the DE value may be a value measured by the Willstatter-Schudel method. Characteristics of hydrolyzed starch (starch hydrolyzate), for example, characteristics such as a molecular weight of starch hydrolyzate and arrangement of sugar molecules constituting starch hydrolyzate, may not be constant for each molecule of starch hydrolyzate and may be present with a certain distribution or variation. Due to the distribution or variation of the characteristics of starch hydrolyzate or a difference in cut sections, each molecule of starch hydrolyzate may exhibit different physical properties (e.g., DE value). In this way, starch hydrolyzate is a set of molecules exhibiting different physical properties, but a measurement result (that is, DE value) by the Willstatter-Schudel method is considered a representative value indicating the degree of hydrolysis of starch.

Starch hydrolyzate may be selected from the group consisting of dextrin having a DE value in a range of about 2 to about 5, indigestible dextrin having a DE value in a range of about 10 to about 15, and a mixture thereof. For example, as the dextrin having a DE value in a range of about 2 to about 5, Pinedex #100 (Matsutani Chemical Industry Co. Ltd) may be utilized. As the indigestible dextrin having a DE value in a range of about 10 to about 15, Pinefiber (Matsutani Chemical Industry Co. Ltd) may be utilized.

In step S200, the produced sheet composition may be applied and dried to produce a flavoring sheet. For example, the flavoring sheet may be produced by applying (e.g., casting) the sheet composition on a predetermined substrate and drying the sheet composition.

The flavoring sheet produced as above may have various composition ratios (content ratios) and physical properties, and specific composition ratios and physical properties may vary according to mixing ratios, drying conditions, and the like of the sheet composition.

In some embodiments, the flavoring sheet may include, with respect to a total of 100 parts by weight, about 0.5 to 10 parts by weight of the emulsifier. It was confirmed that, within such numerical ranges, an amount of flavoring held and retention thereof are enhanced. For example, it was confirmed that, when the content of emulsifier is too low, an increase in the amount of flavoring held is insignificant, and when the content of emulsifier is too high, the content of sheet-forming agent covering the flavoring or the content of flavoring is reduced such that the amount of flavoring held is not significantly increased.

Also, in some embodiments, the flavoring sheet may, with respect to a total of 100 parts by weight, include about 10 to 60 parts by weight or 10 to 40 parts by weight of a flavoring or include about 20 parts by weight or more, 22 parts by weight or more, 24 parts by weight or more, or 26 parts by weight or more of a flavoring. It was confirmed that, when an appropriate amount of emulsifier is added, the amount of fat-soluble flavoring held is increased by about 10% or higher, 15% or higher, or 20% or higher as compared to when the emulsifier is not added.

Also, in some embodiments, the flavoring sheet may include, with respect to a total of 100 parts by weight, about 2 to 15 parts by weight of moisture, about 25 to 90 parts by weight of modified cellulose, and about 0.1 to 60 parts by weight of a flavoring. Also, the flavoring sheet may further include about 0.5 to 10 parts by weight of an emulsifier.

Also, in some embodiments, the flavoring sheet may include, with respect to a total of 100 parts by weight, about 2 to 15 parts by weight of moisture, about 1 to 60 parts by weight of hydrocolloid material, about 1 to 60 parts by weight of LM-pectin, and about 0.1 to 60 parts by weight of a flavoring. Also, the flavoring sheet may further include about 0.5 to 10 parts by weight of an emulsifier.

Also, in some embodiments, with respect to a total of 100 parts by weight of the flavoring sheet, a plasticizer may be included by as much as about 0.1 to 30 parts by weight or by as much as about 5 to 30 parts by weight, 5 to 25 parts by weight, or 5 to 20 parts by weight. Within such numerical ranges, a sheet having appropriate flexibility can be formed. For example, in a case in which the amount of added plasticizer is too small, flexibility of the sheet may be decreased and thus the flavoring sheet may easily break during a cutting process, and in a case in which the amount of added plasticizer is too large, the sheet may not be formed well or may be too soft and not be cut easily.

Also, in some embodiments, a plasticizer may be included by as much as about 0.1 to 30 parts by weight or by as much as about 5 to 30 parts by weight, 10 to 30 parts by weight, 15 to 30 parts by weight, or 15 to 25 parts by weight, as compared to a sheet-forming agent (e.g., a hydrocolloid material such as MC). Within such numerical ranges, a sheet having appropriate flexibility can be produced, and thus workability of the cutting process can be improved.

Also, in some embodiments, with respect to a total of 100 parts by weight of the flavoring sheet, moisture may be included by as much as about 5 to 30 parts by weight or by as much as about 5 to 25 parts by weight, 5 to 20 parts by weight, or 5 to 15 parts by weight. Within such numerical ranges, a sheet having excellent physical properties can be formed. For example, in a case in which the content of moisture is too low, the flavoring sheet may easily break during a cutting process, and in a case in which the content of moisture is too high, the sheet may not be formed well or may be too soft.

Also, in some embodiments, a tensile strength of the flavoring sheet may be in a range of about 2.2 MPa to 3.6 MPa. It was confirmed that, within such numerical ranges, the flavoring sheet has physical properties of not being brittle and thus being easily cut.

The flavoring sheet and the method of producing the flavoring sheet according to some embodiments of the present disclosure have been described above with reference to FIG. 1. According to the above description, by adding a plasticizer during a process of producing a flavoring sheet, a flavoring sheet with improved physical properties can be produced. Since the flavoring sheet has a physical property of not being brittle, workability of a sheet cutting process can be improved.

Meanwhile, in a case in which the flavoring sheet is produced by adding a moisturizing plasticizer such as glycerin or propylene glycol, as described above, the content of moisture in the flavoring sheet can be increased. However, in the case in which the content of moisture in the sheet is increased, while the workability of the cutting process is enhanced, workability of a mixing process may be decreased. For example, when mixing cut pieces of the flavoring sheet and a shredded tobacco-type tobacco material (e.g., shredded tobacco leaves, shredded reconstituted tobacco leaves) to produce a smoking article, due to the content of moisture, a phenomenon in which the flavoring sheet and the tobacco material stick to each other and agglomerate (that is, a phenomenon in which the flavoring sheet and the tobacco material are not evenly mixed) may occur, and accordingly, the workability of the mixing process may be decreased. Hereinafter, a flavoring sheet, which can prevent the agglomeration phenomenon and thus enhance the workability of the mixing process, and a method of producing the flavoring sheet will be described.

According to some embodiments of the present disclosure, a flavoring sheet whose surface roughness is improved to improve the workability of the mixing process can be produced. Specifically, a powder-type material may be mixed to produce a sheet composition, and the produced sheet composition may be applied and dried to produce a flavoring sheet with an improved surface roughness. Since an area of the flavoring sheet that may substantially come into contact with other materials is relatively small, the agglomeration phenomenon can be minimized when the flavoring sheet is mixed with the shredded tobacco-type tobacco material (e.g., shredded tobacco leaves, shredded reconstituted tobacco leaves), and accordingly, the cut pieces of the flavoring sheet and the tobacco material can be evenly mixed.

The powder-type material may be a material present in a powder form at room temperature. As mentioned above, the powder-type material may serve to increase the surface roughness of the flavoring sheet. For example, the powder-type material may remain on a surface of the flavoring sheet after drying of the flavoring sheet and may increase the surface roughness of the flavoring sheet. However, there may be various types of powder-type material, and the powder-type material may vary according to embodiments.

In some embodiments, the powder-type material may be a bulking agent. In other words, the powder-type material may be a bulking agent present in a powder form at room temperature. Examples of the bulking agent may include α-cyclodextrin, β-cyclodextrin, and γ-cyclodextrin, but the bulking agent is not limited thereto. For reference, among the cyclodextrin materials, β-cyclodextrin has the lowest solubility in distilled water and thus may be more effective in increasing the surface roughness of the flavoring sheet. According to the present embodiment, by using a powder-type bulking agent, the flavor retention can also be improved while the surface roughness of the flavoring sheet is increased.

Also, in some embodiments, the powder-type material may be an emulsifier. In other words, the powder-type material may be an emulsifier present in a powder form at room temperature. Examples of the emulsifier may include sucrose ester, but the emulsifier is not limited thereto. According to the present embodiment, by using a powder-type emulsifier, the flavor holding amount can also be improved while the surface roughness of the flavoring sheet is increased. For example, in a case in which a flavoring is fat-soluble, since the emulsifier serves as a cross-link between a water-soluble hydrocolloid material and the fat-soluble flavoring, the flavor holding amount of the flavoring sheet can be significantly enhanced.

Also, in some embodiments, the powder-type material may be a very slightly soluble or insoluble material. For example, the powder-type material may be a material having a property of being very slightly soluble or insoluble in distilled water. In this case, since the amount of powder-type material remaining on the surface of the flavoring sheet after the flavoring sheet is dried is considerably large, the surface roughness of the flavoring sheet can be further improved.

Also, in some embodiments, the powder-type material may be a material whose solubility in water is 160 g/L or lower at 25 °C. For example, the powder-type material may be a material whose solubility in distilled water is 160 g/L or lower at 25 °C. Examples of the material may include sucrose ester, but the material is not limited thereto. According to the present embodiment, since the amount of powder-type material remaining on the surface of the flavoring sheet after the flavoring sheet is dried significantly increases, the surface roughness of the flavoring sheet can be further improved.

Also, examples of the powder-type material may include methyl cellulose (MC), ethyl cellulose (EC), cellulose acetate, carboxymethyl cellulose (CMC), and methyl ethyl cellulose (MEC), but the powder-type material is not limited thereto.

Meanwhile, in some embodiments, in the middle of applying and drying the produced sheet composition (or before applying and drying the produced sheet composition), a powder-type material may be added onto the applied sheet composition. Here, the added powder-type material may be the same as or different from the powder-type material included in the sheet composition. Also, in some cases, the powder-type material may be added only in the middle of drying the sheet composition, without being mixed with the sheet composition. Hereinafter, in order to provide convenience of understanding, the present embodiment will be additionally described with reference to FIG. 2.

As illustrated in FIG. 2, a sheet composition 2 may be applied through an applicator 1. Also, in the middle of drying the applied sheet composition 2 (see the dotted rectangle), a powder-type material 4 may be sprayed (added) to the sheet composition 2 through a sprayer 3. In this case, since the sheet composition 2 is dried in a state in which the powder-type material 4 is sprayed onto a surface of the sheet composition 2, most of the powder-type material 4 evenly remains on a surface of a flavoring sheet 10 after the sheet composition 2 is dried. Also, accordingly, a surface roughness of the flavoring sheet 10 can be further improved, and mixability with the shredded tobacco-type tobacco material can be further improved.

The flavoring sheet with an improved surface roughness and the method of producing the flavoring sheet have been described above with reference to FIG. 2. Hereinafter, a smoking article 100 which includes the flavoring sheet described above and thus has enhanced flavor expression and flavor persistence will be described in detail with reference to FIG. 3 and so on.

FIG. 3 is an exemplary view schematically illustrating the smoking article 100 according to some embodiments of the present disclosure.

As illustrated in FIG. 3, the smoking article 100 may include the filter portion 120, the smoking material portion 110, and a wrapper 130. However, only the components relating to the embodiment of the present disclosure are illustrated in FIG. 3. Therefore, those of ordinary skill in the art to which the present disclosure pertains should understand that the smoking article 100 may further include general-purpose components other than the components illustrated in FIG. 3. Also, FIG. 3 only illustrates one example of smoking articles according to various embodiments of the present disclosure, and a detailed structure of the smoking article may be changed from that illustrated in FIG. 3. Hereinafter, each component of the smoking article 100 will be described.

The filter portion 120 may perform a function of filtering smoke and/or an aerosol generated from the smoking material portion 110. To this end, the filter portion 120 may include a filter material. Examples of the filter material may include a cellulose acetate fiber, paper, etc., but the scope of the present disclosure is not limited thereto. The filter portion 120 may further include the wrapper 130 configured to wrap around the filter material (plug).

As illustrated, the filter portion 120 may be disposed downstream of the smoking material portion 110 and may be connected to a downstream end of the smoking material portion 110. For example, the filter portion 120 and the smoking material portion 110 may have a cylindrical shape (rod shape), may be aligned in the longitudinal axis direction, and may be connected by a tipping wrapper. The tipping wrapper may wrap around at least a portion of the filter portion 120 and at least a portion of the smoking material portion 110 together to connect the filter portion 120 and the smoking material portion 110. In a case in which the filter portion 120 forms a downstream end of the smoking article 100, the filter portion 120 may also serve as a mouthpiece that comes into contact with the oral region of the smoker.

Since the filter portion 120 is produced in the form of a rod, the filter portion 120 may be referred to as a "filter rod 120" in some cases and may be produced in various shapes such as a cylindrical shape, a tubular shape including a hollow therein, and a recessed shape.

Next, the smoking material portion 110 may include a smoking material that can generate smoke and/or an aerosol when burned or heated. The smoking material portion 110 may further include the wrapper 130 configured to wrap around the smoking material.

As illustrated, the smoking material portion 110 may be disposed upstream of the filter portion 120 and may be connected to an upstream end of the filter portion 120. The smoke and/or aerosol generated from the smoking material portion 110 may be delivered to the oral region of the smoker via the filter portion 120 by a puff.

Since the smoking material portion 110 is also produced in the form of a rod, the smoking material portion 110 may be referred to as a "smoking material rod 110" in some cases. Alternatively, the smoking material portion 110 may be referred to as a "medium portion 110."

For example, the smoking material may include a tobacco material. For example, the tobacco material may include pieces of tobacco leaves, tobacco stems, or materials obtained by processing the pieces of tobacco leaves or tobacco stems. As a more specific example, the tobacco material may include ground tobacco leaves, ground reconstituted tobacco, expanded shredded tobacco, expanded tobacco midribs, and reconstituted tobacco leaves. However, the tobacco material is not limited thereto. Also, the tobacco material may have the form of shredded tobacco (e.g., shredded tobacco leaves, shredded reconstituted tobacco leaves), the form of sheets, the form of powder, or the form of tobacco extracts but is not limited thereto.

Also, as illustrated, the flavoring sheet 10 may be applied to (disposed on) the smoking material portion 110. The flavoring sheet 10 applied in this way may continuously express a flavor during smoking and thus improve the flavor expression and flavor persistence of the smoking article 100. In other words, different from a case in which a flavoring is added in a liquid form, a flavoring fixed (covered) by a sheet-forming agent is slowly and continuously expressed during smoking, and thus a problem that most of the flavor is expressed at an early stage of smoking can be effectively addressed. However, specific methods of applying the flavoring sheet 10 may vary.

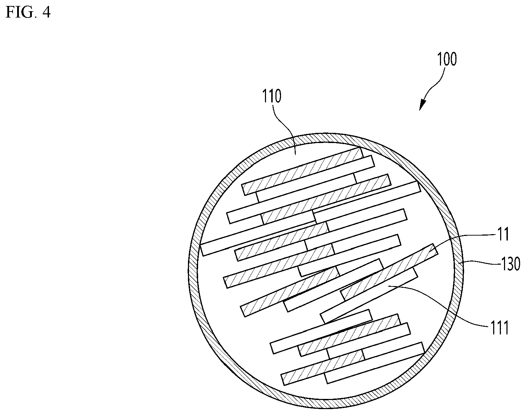

In some embodiments, as illustrated in FIG. 4, cut pieces 11 of the flavoring sheet 10 may be mixed with a shredded tobacco-type tobacco material 111 and, in that state, added to the smoking material portion 110. As described above, the flavoring sheet 10 to which a plasticizer is added has excellent physical properties and thus can be easily cut, and the flavoring sheet 10 with an improved surface roughness has a substantially small contact area and thus can be evenly mixed with the shredded tobacco-type tobacco material 111.

Also, in some embodiments, the flavoring sheet 10 may be attached to a sheet-type tobacco material (e.g., a reconstituted tobacco sheet such as reconstituted tobacco leaves) or may be rolled together with the tobacco material after being attached thereto and, in that form, added to the smoking material portion 110.

Also, in some embodiments, a plurality of shredded tobacco-type tobacco materials may be wrapped around by the flavoring sheet 10 and, in that form, added to the smoking material portion 110.

Meanwhile, in some embodiments, the smoking material may further include an additive such as a wetting agent (moisturizer), a flavoring agent, and/or an organic acid. For example, the wetting agent may include at least one of glycerin, propylene glycol, ethylene glycol, dipropylene glycol, diethylene glycol, triethylene glycol, tetraethylene glycol, and oleyl alcohol. The wetting agent may maintain moisture in the tobacco material at an optimum level and thus soften the inherent flavor and produce a large amount of vapor. Also, for example, the flavoring agent may include licorice, saccharose, fructose syrup, isosweet, cocoa, lavender, cinnamon, cardamom, celery, fenugreek, cascarilla, white sandalwood, bergamot, geranium, honey essence, rose oil, vanilla, lemon oil, orange oil, mint oil, cinnamon, caraway, cognac, jasmine, chamomile, menthol, cinnamon, ylang-ylang, sage, spearmint, ginger, cilantro, a clove extract (or a clove material), coffee, or the like.

Next, the wrapper 130 may refer to a wrapper that wraps around at least a portion of the smoking material portion 110 and/or the filter portion 120. The wrapper 130 may refer to a separate wrapper of the smoking material portion 110 or the filter portion 120 or may refer to a wrapper, such as a tipping wrapper, that wraps around at least a portion of the smoking material portion 110 and at least a portion of the filter portion 120 together. The wrapper 130 may also collectively refer to all wrappers used in the smoking article 100. The wrapper 130 may be made of porous or nonporous wrapping paper, but the scope of the present disclosure is not limited thereto. For example, the wrapper 130 may be made of a metal foil or have a form in which wrapping paper and a metal foil are laminated with each other.

Meanwhile, according to some embodiments of the present disclosure, the flavoring sheet 10 may be applied to the wrapper 130. For example, the flavoring sheet 10 may be disposed (e.g., attached (laminated), coated) on an inner side of the wrapper 130 while having a form that surrounds all or part of the smoking material portion 110. In a case in which at least a portion of the wrapper 130 is made of a metal foil, the flavoring sheet 10 may be disposed on an inner side of the metal foil. In this case, the flavor expression of the flavoring sheet 10 can be further promoted by heat transferred through the metal foil. As another example, the flavoring sheet 10 may constitute at least a portion of the wrapper 130. That is, the flavoring sheet 10 itself may serve as the wrapper 130 of the smoking article 100. Here, the wrapper 130 may only consist of the flavoring sheet 10 or may have a form in which the flavoring sheet 10 and wrapping paper are integrated. In this case, since there is no need to perform a process of placing the flavoring sheet 10 on the wrapper 130 (e.g., an attaching (laminating) process, a coating process), the process of producing the smoking article 100 can be further simplified.

Also, in some embodiments, the flavoring sheet 10 in a rolled or folded form may be disposed on a cooling portion (not illustrated) having a hollow formed therein. For example, the flavoring sheet 10 may be disposed in a rolled or folded form on the hollow of the cooling portion (not illustrated) or may be disposed on an inner wall of the hollow of the cooling portion (not illustrated). Here, the flavoring sheet 10 may be a punched sheet that is processed so that a plurality of holes are formed therein, and since an area of the punched sheet that comes into contact with an airflow is large, performance of the cooling portion (not illustrated) can be further improved. For reference, the cooling portion (not illustrated) may refer to a segment positioned between the smoking material portion 110 and the filter portion 120 to perform a function of cooling smoke and/or an aerosol.

The smoking article 100 according to some embodiments of the present disclosure has been described above with reference to FIGS. 3 and 4. According to the above description, by the flavoring sheet 10 being applied to the smoking article 100, the flavor expression and flavor persistence of the smoking article 100 can be improved.

Hereinafter, the configurations and effects of the flavoring sheet 10 will be further clarified using examples and a comparative example. However, the following examples are only some examples of the present disclosure, and thus the scope of the present disclosure is not limited by the following examples.

### Example 1

A flavoring sheet was produced by adding a plasticizer according to a production method illustrated in FIG. 1. Specifically, a plasticizer made of glycerin and propylene glycol, a flavoring, methyl cellulose, distilled water, and the like were mixed to produce a sheet composition, and the produced sheet composition was applied and dried to produce a flavoring sheet. The plasticizer was added at about 1 wt% with respect to the entire sheet composition (at about 10 parts by weight with respect to methyl cellulose). For reference, since the plasticizer and methyl cellulose are hardly lost in a drying process unlike moisture, the content of plasticizer in the produced flavoring sheet is also about 10 wt% with respect to methyl cellulose.

### Example 2

A flavoring sheet was produced in the same manner as in Example 1 except that the plasticizer was added at about 2 wt% with respect to the entire sheet composition (at about 20 parts by weight with respect to methyl cellulose).

### Example 3

A flavoring sheet was produced in the same manner as in Example 1 except that the plasticizer was added at about 3 wt% with respect to the entire sheet composition (at about 30 parts by weight with respect to methyl cellulose).

### Comparative Example 1

A flavoring sheet was produced in the same manner as in Example 1 except that the plasticizer was not added.

### Experimental Example 1: Evaluation of workability of sheet cutting process according to content of plasticizer

For the flavoring sheets according to the examples and the comparative example, an experiment was conducted to evaluate workability (ease) of a cutting process. Specifically, 10 g of the produced flavoring sheet was cut, the cut flavoring sheet was sieved using a strainer with a mesh size of about 600 µm, and the amount of generated fine powder was measured. This is because a large amount of fine powder being generated indicates that physical properties of the sheet are not good and workability of the cutting process is decreased (that is, the workability is decreased due to brittleness of the sheet). Experimental results are shown in Table 1 below.

**[Table 1]**

| Classification | Example 1 | Example 2 | Example 3 | Comparative Example 1 |
|---|---|---|---|---|
| Cut sheet (g) | 9.83 | 9.92 | 9.95 | 9.8 |
| Fine powder (g) | 0.17 | 0.08 | 0.05 | 0.2 |

Referring to Table 1, the amounts of generated fine powder of the flavoring sheets according to the examples were found to be significantly less as compared to Comparative Example 1, and it was found that the amount of generated fine powder decreased with an increase in the amount of plasticizer added. Specifically, the amounts of generated fine powder of the flavoring sheets according to Examples 1, 2, and 3 were found to be about 15% less, 60% less, and 70% less, respectively, as compared to Comparative Example 1. Such results are determined as showing that addition of the plasticizer can improve physical properties of the sheet and also improve the workability of the cutting process.

Meanwhile, although not shown in Table 1, in a case in which the plasticizer was added at about 4 wt% with respect to the entire sheet composition, the sheet was too soft and not cut easily. From this, it can be seen that the plasticizer may be added at about 3.5 wt% or less with respect to the entire sheet composition (at about 35 parts by weight with respect to methyl cellulose).

The configurations and effects of the flavoring sheet 10 have been further clarified above using the examples and the comparative example.

The embodiments of the present disclosure have been described above with reference to the accompanying drawings, but those of ordinary skill in the art to which the present disclosure pertains should understand that the present disclosure may be embodied in other specific forms without changing the technical spirit or essential features thereof. Therefore, the embodiments described above should be understood as being illustrative, instead of limiting, in all aspects. The scope of the present disclosure should be interpreted according to the claims below, and any technical spirit within the scope equivalent to the claims should be interpreted as falling within the scope of the technical spirit defined by the present disclosure.

## Claims

1. A flavoring sheet comprising:
a hydrocolloid material configured to form a sheet;
a flavoring; and
a plasticizer.

2. The flavoring sheet of claim 1, wherein the hydrocolloid material includes a modified cellulose material.

3. The flavoring sheet of claim 2, wherein the modified cellulose material includes at least one material selected from hydroxypropyl methylcellulose, methyl cellulose, carboxymethyl cellulose, and ethyl cellulose.

4. The flavoring sheet of claim 1, wherein the plasticizer includes at least one of glycerin and propylene glycol.

5. The flavoring sheet of claim 1, wherein, during cutting of the flavoring sheet, an amount of generated fine powder having a particle size of less than 600 µm is less than 2 wt% with respect to a weight of the flavoring sheet that is cut.

6. The flavoring sheet of claim 1, wherein content of the plasticizer in the flavoring sheet is in a range of 5 parts by weight to 30 parts by weight with respect to the hydrocolloid material.

7. The flavoring sheet of claim 1, wherein content of moisture in the flavoring sheet is in a range of 5 parts by weight to 20 parts by weight.

8. The flavoring sheet of claim 1, wherein the flavoring sheet is produced from a sheet composition including the hydrocolloid material, the flavoring, the plasticizer, a solvent, and a powder-type material.

9. The flavoring sheet of claim 8, wherein:
the solvent includes distilled water; and
the powder-type material is a material whose solubility in the distilled water is 160 g/L or lower at 25 °C.

10. The flavoring sheet of claim 8, wherein the powder-type material includes at least one of a bulking agent and an emulsifier.

11. The flavoring sheet of claim 1, wherein:
the hydrocolloid material includes low methoxyl pectin (LM-pectin); and
the LM pectin is a material that contains a carboxyl group by less than about 50% and has a characteristic of not gelating when cooled.

12. A smoking article comprising a smoking material portion in which cut pieces of the flavoring sheet of claim 1 and a shredded tobacco-type tobacco material are mixed.
